# EUROPÄISCHE PATENTSCHRIFT

(11) **EP 3 067 599 B1**
(45) Veröffentlichungstag und Bekanntmachung des Hinweises auf die Patenterteilung: **10.05.2017**
(21) Anmeldenummer: 15000688.0
(22) Anmeldetag: 09.03.2015
(51) Int. Cl.: F16K 31/06

(54) **Ventil**
Valve
Soupape

(43) Veröffentlichungstag der Anmeldung: 14.09.2016
(73) Patentinhaber: FESTO AG & Co. KG, 73734 Esslingen (DE)
(72) Erfinder: Szili, Tamás, 73730 Esslingen (DE); Koch, Michael, 73773 Aichwald (DE); Müller, Sebastian, 70563 Stuttgart (DE)
(74) Vertreter: Patentanwälte Magenbauer & Kollegen Partnerschaft mbB

(56) Entgegenhaltungen:
- EP-A1- 0 681 128
- EP-A2- 1 353 103
- DE-A1- 3 942 026
- DE-A1-102013 002 452
- DE-B3-102009 012 688

## Beschreibung

Die Erfindung betrifft ein Ventil, mit einem Ventilgehäuse, in dem ein Primärkanal, ein Sekundärkanal und eine zwischen dem Primärkanal und dem Sekundärkanal angeordnete Überströmöffnung ausgebildet sind, wobei die Überströmöffnung auf der dem Sekundärkanal zugewandten Seite von einem Ventilsitz umrahmt ist, mit einem im Ventilgehäuse angeordneten Ventilglied, das unter Ausführung einer Arbeitsbewegung in Achsrichtung einer imaginären Hauptachse relativ zum Ventilsitz zwischen einer an dem Ventilsitz anliegenden Schließstellung, in der das Ventilglied die Überströmöffnung mit einer an seiner Vorderseite angeordneten Schließfläche abdeckt, und mindestens einer von dem Ventilsitz abgehobenen Offenstellung bewegbar ist, wobei das Ventilglied mit einer entgegengesetzt zur Schließfläche orientierten und zumindest im Wesentlichen gleich groß wie die Schließfläche ausgebildeten Kompensationsfläche eine zumindest in der Schließstellung mit dem Primärkanal verbundene Ausgleichskammer begrenzt, die außerdem von einer der Kompensationsfläche gegenüberliegenden Abschlussfläche eines Abstützkörpers begrenzt ist.

Aus der DE 10 2013 002 452 A1 ist ein Ventil der eingangs genannten Art bekannt, das ein in einem Ventilgehäuse beweglich gelagertes Ventilglied aufweist und das eine Überströmöffnung, die zwischen einem Primärkanal und einem Sekundärkanal ausgebildet ist, sowie einen an der Seite des Sekundärkanals die Überströmöffnung umrandenden Ventilsitz umfasst. Das Ventilglied ist relativ zum Ventilgehäuse entlang einer Arbeitsachse beweglich und kann eine Schließstellung, in der eine Schließfläche des Ventilglieds abdichtend auf dem Ventilsitz anliegt, und mindestens eine Offenstellung, in der das Ventilglied vom Ventilsitz abgehoben ist und einen Fluiddurchtritt ermöglicht, einnehmen. Eine der Schließfläche entgegengesetzte Stirnfläche des Ventilglieds begrenzt mit einem gegenüberliegenden Abstützkörper, der von dem Ventilgehäuse gebildet ist, eine Ausgleichskammer, die mit dem Primärkanal dauerhaft in Verbindung steht. Hierdurch ist das Ventilglied druckkompensiert und kann unabhängig von den herrschenden Drücken mit geringen Stellkräften betätigt werden. Fertigungsbedingte Bauteiltoleranzen wirken sich bei dieser Ausgestaltung derart aus, dass ein zusätzliches Dichtelement in Form einer Dichthülse montiert werden sollte, um eine gute Abdichtung zu erreichen.

Der Erfindung liegt die Aufgabe zugrunde, ein druckkompensiertes Ventil zu schaffen, das in seiner Herstellung kostengünstig und von Fertigungstoleranzen relativ unabhängig ist.

Die Aufgabe wird in Kombination mit den eingangs genannten Merkmalen dadurch gelöst, dass der Abstützkörper unter Abdichtung in eine rückseitige Führungsausnehmung des Ventilgliedes eintaucht und in dieser Führungsausnehmung mit der an ihm angeordneten Abschlussfläche die Ausgleichskammer begrenzt, wobei das Ventilglied und der Abstützkörper in Achsrichtung der Hauptachse relativ zueinander verschieblich sind, und dass der Abstützkörper eine der Abschlussfläche entgegengesetzte Abstützfläche aufweist, mit der er an einer gehäusefesten Gegenabstützfläche abgestützt oder abstützbar ist, wobei er relativ zu der Gegenabstützfläche quer zur Achsrichtung der Hauptachse allseits beweglich ist.

Durch die Erfindung wird ein druckkompensiertes Ventil zur Verfügung gestellt, bei dem der in der Ausgleichskammer herrschende Primärdruck nicht direkt auf eine gehäusefeste Gegenabstützfläche, sondern auf den zusätzlichen Abstützkörper wirkt, der sich seinerseits an der Gegenabstützfläche abstützt und dabei quer zur Bewegungsrichtung der Arbeitsbewegung beweglich ist. Durch den abgedichtet in der Führungsausnehmung verschiebbaren und zugleich auch bezüglich der Gegenabstützfläche quer beweglichen Abstützkörper wird erreicht, dass sich das Ventilglied im Ventilgehäuse bezüglich der Hauptachse mittig ausrichten kann, ohne dass es zu Verklemmungen kommt. Somit kann sich das Ventilglied selbsttätig in eine Position verlagern, in der minimale Reibkräfte herrschen und toleranzbedingte Maßabweichungen der Bauteile kompensiert sind. Auf diese Art ist ein gegenüber Formtoleranzen unempfindliches und in seiner Herstellung kostengünstiges Ventil zur Verfügung gestellt.

Vorteilhafte Weiterbildungen der Erfindung gehen aus den Unteransprüchen hervor.

In einer vorteilhaften Weiterbildung der Erfindung begrenzt der in die Führungsausnehmung eingetauchte Abstützkörper mit seiner Abstützfläche eine Beaufschlagungskammer, die unabhängig von der Stellung des Ventilgliedes ständig mit dem Sekundärkanal in Verbindung steht. Diese Ausgestaltung hat den Vorteil, dass aus dem Sekundärdruck resultierende Druckkräfte an der Abstützfläche wirken, die den Druckkräften an der Abschlussfläche, die infolge einer Fluidbeaufschlagung seitens des Primärkanals wirken, entgegenstehen. Somit ist die auf den Abstützkörper wirkende resultierende Kraft reduziert.

Bevorzugt ist die Beaufschlagungskammer auch durch die außerhalb der Ausgleichskammer angeordnete Rückseite des Ventilgliedes begrenzt, so dass das Ventilglied rückseitig vom Sekundärdruck beaufschlagt ist. Dadurch wird erreicht, dass das Ventilglied insgesamt zumindest im Wesentlichen druckkompensiert ist.

In einer bevorzugten Ausführungsform ist die Gegenabstützfläche Teil eines bezüglich dem Ventilgehäuse ortsfesten Gegenabstützkörpers. Insbesondere kann der Gegenabstützkörper in einer Art ausgebildet sein, dass er die Anbringung von weiteren Komponenten begünstigt, beispielsweise von Komponenten eines zur Betätigung des Ventilgliedes dienenden Stellantriebes. Als besonders vorteilhaft wird eine stabförmige Ausbildung des Gegenabstützkörpers betrachtet.

Zweckmäßigerweise ist der Gegenabstützkörper, der vorzugsweise als stabförmiger Körper ausgebildet ist, ein Bestandteil eines Deckelelementes, das eine das Ventilglied aufnehmende Ausnehmung eines Gehäusehauptteils verschließt. Auf diese Weise sind die einzelnen Ventilkomponenten einfach und kostengünstig montierbar.

In einer weiteren, besonders vorteilhaften Ausführung der Erfindung ist die Gegenabstützfläche derart ausgestaltet, dass ihre Fläche betragsmäßig kleiner ist als die Abstützfläche des Abstützkörpers. So wird erreicht, dass die Abstützfläche des Abstützkörpers, in einem an die Gegenabstützfläche angedrückten Zustand, nur teilweise von der Gegenabstützfläche bedeckt ist. Dadurch kann der Sekundärdruck auch auf einen betragsmäßig besonders hohen Flächenanteil der Abstützfläche einwirken.

Als besonders vorteilhaft wird eine Ausgestaltung angesehen, bei der das Ventilglied im Bereich der Schließfläche eine vorzugsweise koaxial zur Hauptachse angeordnete Durchbrechung hin zur Kompensationsfläche aufweist. Dadurch ist die durch den Abstützkörper begrenzte Ausgleichskammer in besonders einfacher Weise und auf kurzem Weg ständig mit dem Primärkanal verbunden. Prinzipiell ist es allerdings auch möglich, einen die Verbindung zwischen dem Primärkanal und der Ausgleichkammer herstellenden Verbindungskanal mit anderem Verlauf im Ventilgehäuse zu realisieren.

Eine zweckmäßige Ausprägung der Erfindung enthält mindestens ein gummielastisch wirkendes Dichtelement, das zwischen dem Außenumfang des Abstützkörpers und der Führungswandung der am Ventilglied angebrachten Führungsausnehmung angeordnet ist. Vorzugsweise ist das gummielastische Dichtelement unmittelbar an dem Abstützkörper selbst angeordnet, so dass es dessen Arbeitsbewegung mitmacht. Alternativ kann die gewünschte Dichtwirkung auch mit einer Bauform erzielt werden, die auf hartdichtende Mittel ohne gesondertes elastisches Dichtelement zurückgreift, so dass man von einer "Spaltdichtung" sprechen kann.

Es ist vorteilhaft, wenn der Abstützkörper, der in der Führungsausnehmung linear verschiebbar geführt ist, in Achsrichtung der imaginären Hauptachse relativ zu der gehäusefesten Gegenabstützfläche des, Gegenabstützkörpers frei bewegbar ist. Dadurch kann der Abstützkörper als separates Bauteil ausgebildet werden, der nur lose an der Gegenabstützfläche anliegt, wodurch die Montage vereinfacht wird. Außerdem bietet dies für den Abstützkörper auch die Möglichkeit, sich gemeinsam mit dem Ventilglied axial zu bewegen, wenn die Druckdifferenz zwischen dem Primärdruck und dem Sekundärdruck relativ gering ist und eine entsprechend hohe Reibung zwischen dem Abstützkörper und dem Ventilglied vorliegt. Letzteres ist insbesondere der Fall, wenn zur Abdichtung zwischen dem Abstützkörper und dem Ventilglied ein elastisches Dichtelement vorgesehen ist. Dadurch ergibt sich eine besonders exakte Regelmöglichkeit des Ventils, weil das Ventilglied besonders reibungsarm bewegbar ist.

Zweckmäßigerweise ist der Abstützkörper an seiner Abstützfläche konvex ausgebildet. Durch diese Ausbildung, die zum Beispiel durch eine ballige oder kugelartige Formgebung erzielbar ist, wird erreicht, dass eine sehr kleine, bevorzugt punktuelle Kontaktfläche zwischen dem Abstützkörper und der Gegenabstützfläche entsteht. Dadurch wird eine geringe Reibung zwischen der Gegenabstützfläche und dem Abstützkörper hervorgerufen. Dies hat den Vorteil, dass die Querbeweglichkeit des Abstützkörpers bezüglich der Gegenabstützfläche besonders begünstigt wird.

Zweckmäßigerweise ist das Ventil zur Betätigung mit einem Stellantrieb ausgestattet. Der Stellantrieb ist von elektrisch betätigbarer Art und beispielsweise von elektromagnetischer Funktionsart oder von elektrodynamischer Funktionsart. Es ist vorgesehen, dass das Ventilgehäuse und das Ventilglied jeweils eine von zwei Stellantriebskomponenten des Stellantriebs aufweisen. Diese Stellantriebskomponenten des Stellantriebs sind derart ausgestaltet, dass sie durch gegenseitiges Zusammenwirken die Arbeitsbewegung des Ventilglieds hervorrufen, um das Öffnen und das Schließen der Überströmöffnung zu bewirken.

Zweckmäßigerweise ist die bezüglich des Ventilgliedes ortsfest ausgebildete Stellantriebskomponente des Stellantriebs an einem die Gegenabstützfläche aufweisenden Gegenabstützkörper angeordnet. Hierbei ist es von Vorteil, wenn diese Stellantriebskomponente von dem Gegenabstützkörper koaxial durchsetzt ist. Auf diese Weise kann eine besonders einfache und platzsparende Befestigung der Stellantriebskomponente des Stellantriebs an dem Gegenabstützkörper erfolgen.

In einer besonderen Ausführungsform der Erfindung weist das Ventilglied einen topfartig ausgestalteten Ventilgliedkörper auf, dessen offene Seite von der Überströmöffnung abgewandt ist. Zweckmäßigerweise ist dieser topfartige Ventilgliedkörper derart geformt, dass er eine Bodenwand und eine von der Bodenwand rückseitig axial wegragende umlaufende Seitenwand besitzt. Infolge dieser Gestaltung definiert der Ventilgliedkörper an seiner offenen Rückseite einen Ventilgliedinnenraum, der dazu genutzt werden kann, Komponenten des Ventils aufzunehmen. Insbesondere kann eine bezüglich dem Ventilgehäuse ortsfeste Stellantriebskomponente platzsparend in dem Ventilgliedinnenraum untergebracht werden.

Vorzugsweise ist in dem Ventilgliedinnenraum des topfartig ausgebildeten Ventilgliedkörpers an der Bodenwand ein nach rückwärts wegragender hülsenförmiger Führungskörper angeordnet. Dieser hülsenförmige Führungskörper begrenzt peripher die Führungsausnehmung, in der der Abstützkörper verschiebbar geführt ist. Der hülsenförmige Führungskörper ist bevorzugt so an der Bodenwand des Ventilgliedkörpers angebracht, dass zwischen der von der Bodenwand wegragenden Seitenwand des topfförmigen Ventilgliedkörpers und der peripheren Außenfläche des hülsenförmigen Führungskörpers ein rückseitig in axialer Richtung offener Ringraum definiert wird. Dieser Ringraum wird zweckmäßigerweise genutzt, um darin eine Druckfeder aufzunehmen, die das Ventilglied ständig in seine Schließstellung vorspannt. Auf diese Weise handelt es sich bei der Schließstellung um eine stabile Grundstellung des Ventilgliedes.

In einer weiteren vorteilhaften Ausbildung der Erfindung ist vorgesehen, dass das Ventilglied an seiner der offenen Rückseite entgegengesetzten, der Überströmöffnung zugewandten Vorderseite ein zusätzliches Schließelement aufweist, das die Schließfläche bildet. Vorzugsweise besitzt dieses Schließelement gummielastische Eigenschaften, so dass es beim Anliegen an dem Ventilsitz eine besonders sichere Abdichtung des Primärkanals gegenüber dem Sekundärkanal hervorruft.

Nachfolgend wird die Erfindung anhand der beiliegenden Zeichnung näher erläutert. In dieser zeigen:
- Figur 1: eine bevorzugte Ausführungsform des erfindungsgemäßen Ventils im Längsschnitt, wobei das bewegbare Ventilglied bei Einnahme seiner Schließstellung gezeigt ist.
- Figur 2: das gleiche Ventil im Längsschnitt, wobei das Ventilglied bei Einnahme einer Offenstellung gezeigt ist.

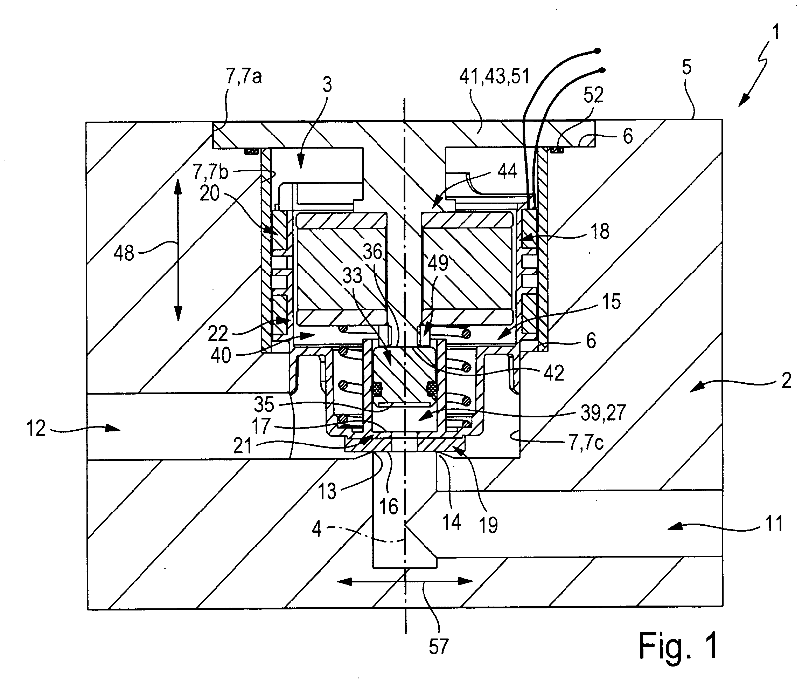

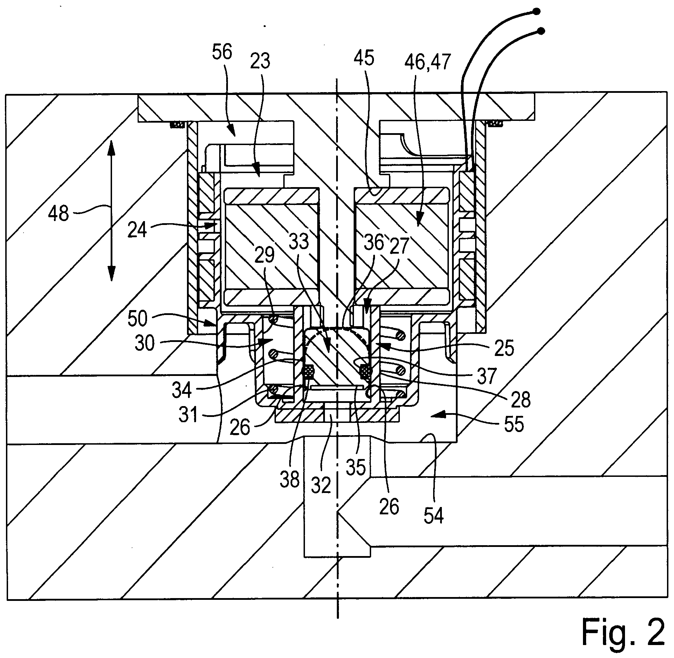

In den Figuren 1 und 2 ist gesamthaft ein Ventil 1 dargestellt, das ein Ventilgehäuse 2 aufweist. In das Ventilgehäuse 2 ist eine sich in axialer Richtung entlang einer Hauptachse 4 erstreckende Ausnehmung 3 eingebracht, die in den Figuren 1 und 2 durch eine gestrichelte Linie dargestellt ist. Vorzugsweise erstreckt sich die Ausnehmung 3 ausgehend von einer ersten Ventilgehäuseaußenfläche 5 in zylindrischer Form axial entlang der Hauptachse 4, wobei sie konzentrisch zur Hauptachse 4 angeordnet ist.

Die Ausnehmung 3 ist zweckmäßigerweise stufenförmig ausgeführt, so dass sie mehrere über terrassenartige Ringstufen 6 ineinander übergehende zylindrische Ausnehmungsabschnitte 7 unterschiedlichen Durchmessers aufweist. In der Figur 1 ist eine bevorzugte Ausführungsform gezeigt, bei der die Ausnehmung 3 ausgehend von der ersten Ventilgehäuseaußenfläche 5 über drei axial ineinander übergehende Ausnehmungsabschnitte 7 verfügt, nämlich einen ersten Ausnehmungsabschnitt 7a, einen zweiten Ausnehmungsabschnitt 7b und einen dritten Ausnehmungsabschnitt 7c, wobei die Durchmesser dieser Ausnehmungsabschnitte 7, 7a, 7b und 7c ausgehend von der ersten Ventilgehäuseaußenfläche 5 abnehmen, so dass der am tiefsten im Ventilgehäuse 2 liegende dritte Ausnehmungsabschnitt 7c den kleinsten Durchmesser aufweist. Bei einem nicht gezeigten Ausführungsbeispiel ist die Ausnehmung 3 ohne Abstufungen realisiert.

In die Ausnehmung 3 münden ein Primärkanal 11 und ein Sekundärkanal 12. Dabei ist ein druckbeaufschlagtes Fluid durch den Primärkanal 11 heranführbar, wobei eine nicht näher gezeigte Druckquelle das druckbeaufschlagte Fluid breitstellt. Durch den Sekundärkanal 12 hindurch ist das druckbeaufschlagte Fluid zu einem nicht gezeigten Verbraucher abführbar. Eine umgekehrte Kanalnutzung ist allerdings ebenfalls möglich.

Die Ausnehmung 3 hat eine axiale Bodenfläche 54, die exemplarisch den dritten Ausnehmungsabschnitt 7c begrenzt. Der Primärkanal 11 mündet, insbesondere zentral, an der Bodenfläche 54 in die Ausnehmung 3 ein. Der Sekundärkanal 12 mündet seitlich ebenfalls in den dritten Ausnehmungsabschnitt 7c ein. Die an der Bodenfläche 54 angeordnete Kanalmündung des Primärkanals 11 bildet eine Überströmöffnung 13, durch die hindurch der Primärkanal 11 mit dem Sekundärkanal 12 verbindbar ist. Die Überströmöffnung 13 ist an der Bodenfläche 54 von einem dem Sekundärkanal 12 zugewandten Ventilsitz 14 umrahmt.

In der Ausnehmung 3 erstreckt sich axial entlang der Hauptachse 4 ein Ventilglied 15, das relativ zu dem Ventilgehäuse 2 unter Ausführung einer später erläuterten Arbeitsbewegung 48 in axialer Richtung längs der Hauptachse 4 hin und her beweglich ist. Das Ventilglied 15 hat an seiner dem Ventilsitz 14 zugewandten Vorderseite eine Schließfläche 16, mit der die von dem Ventilsitz 14 umrahmte Überströmöffnung 13 abdeckbar ist, sowie rückseitig eine zur Schließfläche 16 entgegengesetzt orientierte Kompensationsfläche 17, die zumindest im Wesentlichen betragsmäßig die gleiche Fläche hat wie die Schließfläche 16.

Das Ventilglied 15 verfügt vorzugsweise über einen mehrteiligen Aufbau, bestehend aus einem Ventilgliedkörper 18, einem an dessen der Überströmöffnung 13 zugewandter Vorderseite angeordneten Schließelement 19 und einer bevorzugt mehrteiligen ersten Stellantriebskomponente 20 eines insgesamt mit Bezugsziffer 46 bezeichneten Stellantriebs, der zur Erzeugung der Antriebsbewegung 48 dient.

Der bevorzugt zylindrische Ventilgliedkörper 18 ist insbesondere topfartig ausgestaltet und hat an seiner Vorderseite eine Bodenwand 21, an deren Außenseite das die dem Ventilsitz 14 zugewandte Schließfläche 16 aufweisende Schließelement 19 und an deren entgegengesetzter Innenseite die Kompensationsfläche 17 angeordnet ist. Die Kompensationsfläche 17 ist dabei betragsmäßig zumindest in Wesentlichen von gleicher Größe wie die Schließfläche 16. Vom Rand der Bodenwand 21 ragt rückseitig entlang der Hauptachse 4 eine die Bodenwand 21 umrahmende Seitenwand 22 des Ventilgliedkörpers 18 weg, wodurch ein durch die Seitenwand 22 und die Bodenwand 21 rückseitig offener Ventilgliedinnenraum 23 begrenzt ist. Die Seitenwand 22 ist durch eine innenliegende Innenumfangsfläche 29 und eine außenliegende Außenumfangsfläche 50 begrenzt. Bei einem nicht gezeigten Ausführungsbeispiel entfällt ein separates Schließelement 19 und die Schließfläche 16 ist direkt an der axialen Außenseite der Bodenwand 21 ausgebildet.

In der Zeichnung ist eine Ausführungsform gezeigt, bei der die Seitenwand 22 des zylindrischen Ventilgliedkörpers 18 stufenartig, sich von der Bodenwand 21 weg erweiternd ausgebildet ist, wodurch der Ventilgliedkörper 18 in seiner Erstreckung quer zur Hauptachse 4 den Durchmessern der Ausnehmungsabschnitte 7, 7a, 7b, 7c angeglichen sein kann. Dadurch ist der bewegliche Ventilgliedkörper 18 vorzugsweise entlang der Hauptachse 4 relativ zum Ventilgehäuse 2 linear verschiebbar gelagert und quer zur Hauptachse 4 abgestützt.

In die Außenumfangsfläche 50 der Seitenwand 20 des Ventilgliedkörpers 18 sind vorzugsweise mehrere axial beabstandete Ringnuten 24 eingebracht, um die beim Ausführungsbeispiel mehrteilige und bevorzugt zweiteilige erste Stellantriebskomponente 20 in einfacher Weise aufnehmen und in axialer Richtung fixieren zu können. Es ist auch möglich, andere Mittel zur Anbringung der ersten Stellantriebskomponente 20 am Ventilgliedkörper 18 vorzusehen, zum Beispiel voneinander beabstandet angebrachte Sicherungsringe. Die erste Stellantriebskomponente 20 ist bevorzugt ringförmig ausgebildet und umschließt die Seitenwand 22 koaxial.

Das an der dem Ventilsitz 14 zugewandten Vorderseite des Ventilgliedkörpers 18 angebrachte Schließelement 19 besteht vorzugsweise aus gummielastischem Material, um bei Anlage an dem Ventilsitz 14 die von dem Ventilsitz 14 umrahmte Überströmöffnung 13 sicher verschließen zu können, wodurch ein Fluidübertritt zwischen dem Primärkanal 11 und dem Sekundärkanal 12 zuverlässig verhindert werden kann.

Rückseitig am Ventilgliedkörper 18 ist ferner ein hülsenförmiger, sich in axialer Richtung entlang der Hauptachse 4 erstreckender Führungskörper 25 angeordnet, der die Kompensationsfläche 17 umrahmt und ausgehend von der Kompensationsfläche 17 in den Ventilgliedinnenraum 23 hineinragt. Dieser Führungskörper 25 definiert mit einer innenseitigen Führungswand 26 eine zylindrische Führungsausnehmung 27. Radial zwischen der an dem Führungskörper 25 außenseitig angeordneten zylindrischen Außenfläche 28 und der den Führungskörper 25 mit radialem Abstand umgebenden, zur Seitenwand 22 gehörenden Innenumfangsfläche 29 ist ein Ringraum 30 definiert, der zweckmäßigerweise zur Aufnahme einer Druckfeder 31 genutzt wird. Diese Druckfeder 31 kann das Ventilglied 15 ständig in Richtung seiner am Ventilsitz 14 anliegenden Schließstellung vorspannen, wodurch selbiges auch im unbetätigten Zustand des Stellantriebs 46 eine definierte Grundstellung einnimmt. Die Druckfeder 31 stützt sich dabei vorzugsweise an der Bodenwand 21 des Ventilgliedkörpers 18 und auch mittelbar oder unmittelbar am Ventilgehäuse 2 ab.

Die Bodenwand 21 und das optional vorhandene Schließelement 19 sind von einer bevorzugt koaxial zur Hauptachse 4 verlaufenden Durchbrechung 32 durchsetzt, die zum einen zu der an der Vorderseite des Ventilglieds 15 ausgebildeten Schließfläche 16 und zum anderen zu der Kompensationsfläche 17 ausmündet. In einfacher Weise ist somit eine ständig offene Verbindung zwischen dem Primärkanal 11 und einer innerhalb des Führungskörpers 23 von der Kompensationsfläche 17 axial begrenzten Ausgleichskammer 39 hergestellt, wobei eine derartige Verbindung auch in anderer Weise realisiert sein kann, zum Beispiel durch eine das Ventilgehäuse 2 durchsetzende Verbindung.

Das Ventil 1 weist weiterhin einen vorzugsweise separat ausgebildet Abstützkörper 33 auf, der zweckmäßigerweise sowohl bezüglich des Ventilgliedes 15 als auch bezüglich des Ventilgehäuses 2 in Achsrichtung der Hauptachse 4 verschieblich ist. Der Abstützkörper 33 ist bevorzugt von zylindrischer Gestalt und besitzt peripher eine Abstützkörpermantelfläche 34, die axial durch eine stirnseitig angeordnete Abschlussfläche 35 und eine dieser Fläche entgegengesetzte Abstützfläche 36 begrenzt ist. Der Abstützkörper 33 ist linear verschiebbar innerhalb des Führungskörpers 25 angeordnet, wobei die Abschlussfläche 35 der Kompensationsfläche 17 zugewandt ist.

Die Abstützfläche 36 kann, wie in der Figur 2 durch eine gestrichelte Linie angedeutet, konvex oder in ähnlicher Art gewölbt sein. Beim Ausführungsbeispiel ist sie als Planfläche ausgebildet. Ferner ist in die Abstützkörpermantelfläche 34 zweckmäßigerweise mindestens eine Ringnut 37 eingebracht, die die Anordnung mindestens eines gummielastische Eigenschaften aufweisenden Dichtelementes 38 ermöglicht, das an der Führungswand 26 unter Abdichtung und gleitverschieblich anliegt. Durch das Dichtelement 38 wird eine radiale Abdichtung zwischen der Abstützkörpermantelfläche 34 und der Führungswand 26 erreicht. Bei einer nicht abgebildeten anderen Ausführungsform ist das Dichtelement 38 an der Führungswand 26 des Führungskörpers 25 fixiert. Es ist auch möglich, das Dichtelement 38 gesamthaft entfallen zu lassen, so dass eine radiale Abdichtung mit hartdichtenden Mitteln, beispielsweise in Form einer "Spaltdichtung" erreicht wird.

Wie in der Zeichnung illustriert, ist der Durchmesser des zylindrischen Abstützkörpers 33 derart ausgestaltet, dass er in die Führungsausnehmung 27 des rückseitig an der Kompensationsfläche 17 des Ventilgliedkörpers 18 angebrachten Führungskörpers 25 unter radialer Abdichtung mit seiner Abschlussfläche 35 voran gleitverschieblich eintauchen kann. Auf diese Weise ist durch die Abschlussfläche 35 des Abstützkörpers 33, durch die Führungswand 26 des Führungskörpers 25 sowie durch die Kompensationsfläche 17 des Ventilglieds 15 die Ausgleichskammer 39 begrenzt, die zumindest in der Schließstellung des Ventilgliedes 15, wie sie in der Figur 1 gezeigt ist, über die Durchbrechung 32 mit dem Primärkanal 11 in Verbindung steht. Somit herrscht in der Ausgleichskammer 39 der gleiche Druck wie im Primärkanal 11.

Das Ventilglied 15 unterteilt die Ausnehmung 3 axial in einen dem Ventilsitz 14 zugewandten inneren Endabschnitt 55 und einen axial weiter außen liegenden äußeren Endabschnitt 56. Der äußere Endabschnitt 56 definiert eine Beaufschlagungskammer 40, die axial innen von der vom Ventilsitz 14 wegweisenden Abstützfläche 36 des in den Innenraum des Führungskörpers 25 eingetauchten Abstützkörpers 33 und von dem Ventilkörper 18 begrenzt ist. Die Beaufschlagungskammer 40 ist unabhängig von der eingenommenen Stellung des Ventilglieds 15 durch einen zwischen dem Ventilglied 15 und dem Ventilgehäuse 2 ausgebildeten Spalt hindurch ständig mit dem Sekundärkanal 12 verbunden.

Ausgehend von der ersten Ventilgehäuseaußenfläche 5 erstreckt sich ein gehäusefester Gegenabstützkörper 41 axial entlang der Hauptachse 4 in den Ventilgliedinnenraum 23 hinein, wobei der Gegenabstützkörper 41 stirnseitig an der dem Ventilsitz 14 zugewandten Vorderseite eine Gegenabstützfläche 42 aufweist. Der Gegenabstützkörper 41 ist vorzugsweise stabförmig ausgebildet und seine stirnseitig angeordnete Gegenabstützfläche 42 hat zweckmäßigerweise einen betragsmäßig kleineren Durchmesser als die Führungsausnehmung 27. Der Gegenabstützkörper 41 erstreckt sich bevorzugt bis hin zur Führungsausnehmung 27, in die er vorzugsweise eintaucht. Es ist allerdings auch eine Gestaltung möglich, bei der sich der Gegenabstützkörper 41 nicht bis in die Führungsausnehmung 27 hinein erstreckt, sondern lediglich an die Führungsausnehmung 27 angrenzt.

Die Gegenabstützfläche 42 ist zweckmäßigerweise plan ausgebildet, wobei sie orthogonal zur Hauptachse 4 ausgerichtet ist.

Der Gegenabstützkörper 41 ist bevorzugt Teil eines Deckelelementes 43, das die Ausnehmung 3 des Ventilgehäuses 2 verschließt. In der Figur 1 ist eine solche Ausführungsform gezeigt, wobei der stabförmige Gegenabstützkörper 41 koaxial und bevorzugt einseitig an einem scheibenförmigen Verschlussabschnitt 51 des Deckelelements 43 angeordnet ist und sich ausgehend von dem Verschlussabschnitt 51 in den Ventilgliedinnenraum 23 hinein erstreckt. Der Verschlussabschnitt 51 verschließt die Ausnehmung 3, wobei Dichtelemente 52 derart angeordnet sind, dass die Ausnehmung 3 fluiddicht gegenüber der Atmosphäre abgedichtet ist.

Der stabförmige Gegenabstützkörper 41 weist zweckmäßigerweise ein zwischen der ersten Ventilgehäuseaußenfläche 5 und der Gegenabstützfläche 42 angeordnetes zylindrisches Schulterelement 44 auf, das einen betragsmäßig größeren Durchmesser als die Gegenabstützfläche 42 hat. Es definiert eine zumindest im Wesentlichen parallel zur Gegenabstützfläche 42 angeordnete und zu dem Ventilsitz 14 weisende Schulterfläche 45 im Ventilgliedinnenraum 23.

Der weiter oben schon erwähnte Stellantrieb 46, der aus der am Ventilglied 15 angeordneten ersten Stellantriebskomponente 20 und einer gehäusefest angeordneten zweiten Stellantriebskomponente 47 besteht, ist in der Lage, die Arbeitsbewegung 48 des Ventilglieds 15 hervorzurufen. Vorteilhafterweise ist der Stellantrieb 46 elektrisch betätigbar und vorzugsweise von elektrodynamischer oder elektromagnetischer Funktionsart.

Der stabförmig ausgebildete Gegenabstützkörper 41 fungiert bevorzugt als Träger für die zweite Stellantriebskomponente 47. Wie aus der Zeichnung zu ersehen ist, ist die zweite Stellantriebskomponente 47 vom Gegenabstützkörper 41 axial durchsetzt und an der Schulterfläche 45 mithilfe eines am Gegenabstützkörper 41 angeordneten Befestigungselementes 49 angedrückt, so dass die zweite Stellantriebskomponente 47 relativ zu dem Gegenabstützkörper 41 und folglich auch relativ zu dem Ventilgehäuse 2 ortsfest angeordnet ist. Hierdurch kann auf einfache Weise die Stellantriebskomponente 47 des gesamthaften Stellantriebes 46 platzsparend befestigt werden. Die zweite Stellantriebskomponente 47 befindet sich insbesondere zur Gänze innerhalb des Ventilgliedinnenraums 23.

Das Ventilglied 15 kann relativ zu dem Ventilgehäuse 2 die durch einen Doppelpfeil angedeutete Arbeitsbewegung 48 linear entlang der Hauptachse 4 ausführen, wobei das Ventilglied 15 zwischen einer Schließstellung und mindestens einer Offenstellung hin und her bewegbar ist.

In der Schließstellung ist das Ventilglied 15 mit seiner dem Ventilsitz 14 zugewandten Schließfläche 16 auf den Ventilsitz 14 der Überströmöffnung 13 aufgedrückt, so dass selbige verschlossen und der Primärkanal 11 gegenüber dem mit dem Sekundärkanal 12 kommunizierenden Grundabschnitt 55 der Ausnehmung 3 abgedichtet ist.

In der Figur 2 ist exemplarisch die maximale Offenstellung des Ventilglieds 15 dargestellt, wobei das Schließelement 19 vom Ventilsitz 14 der Überströmöffnung 13 abgehoben ist und zwischen dem Primärkanal 11 und dem Sekundärkanal 12 eine fluidführende Verbindung besteht. Die möglichen Offenstellungen des Ventilglieds 15 umfassen auch nicht gezeigte Stellungen, in denen das Schließelement 19 vom Ventilsitz 14 in anderen Entfernungen abgehoben ist. In diesem Zusammenhang ist das Ventil 1 als Proportionalventil ausgeführt.

Die fluidische Verbindung zwischen dem Primärkanal 11 und der Ausgleichskammer 39 erfolgt durch die Durchbrechung 32 hindurch, so dass das im Primärkanal 11 anstehende druckbeaufschlagte Fluid auch in die Ausgleichskammer 39 einströmt und damit zum einen die Kompensationsfläche 17 und zum anderen auch die am Abstützkörper 33 angeordnete Abschlussfläche 35 beaufschlagt. Dadurch ist das Ventilglied 15 hinsichtlich des Primärdruckes druckausgeglichen.

Der in Achsrichtung der Hauptachse 4 verschieblich angeordnete Abstützkörper 33 ist im Rahmen einer durch einen Doppelpfeil angedeutete Ausgleichbewegung 57 relativ zu der Gegenabstützfläche 42 in bezüglich der Hauptachse 4 radialer Richtung allseits beweglich. Bei der Ausgleichsbewegung 57 kann die dem Ventilsitz 14 abgewandte Abstützfläche 36 des Abstützkörpers 33 an der bevorzugt orthogonal zur Hauptachse 4 ausgerichteten Gegenabstützfläche 42 des gehäusefesten Gegenabstützkörpers 41 abgleiten.

Der Abstützkörper 33 liegt in der Führungsausnehmung 27 des Führungskörpers 25 abdichtend und gleitverschieblich an der Führungswand 20 an. Dadurch ist der Abstützkörper 33 in seiner bezüglich der Hauptachse 4 eingenommenen Querposition an die diesbezügliche Querposition des Ventilgliedes 15 gekoppelt, die durch die koaxiale Ausrichtung des Ventilgliedes 15 bezüglich der Ausnehmung 3 vorgegeben ist. Da der Abstützkörper 33 jedoch in der Lage ist, sich unter Ausführung der Ausgleichsbewegung 57 relativ zu der Gegenabstützfläche 42 zu bewegen, kann er sich ungehindert entsprechend der Querposition des Ventilgliedes 15 ausrichten, das folglich stets mit nur geringer Reibung und geringem Verschleiß seine Arbeitsbewegung 48 ausführen kann.

Durch die mit dem Primärkanal 11 in Verbindung stehende und durch ihn hindurch druckbeaufschlagte Abschlussfläche 35 und durch die mit dem Sekundärkanal 12 in Verbindung stehende und durch ihn hindurch druckbeaufschlagte Abstützfläche 36 wird erreicht, dass auf den Abstützkörper 33 in axialer Richtung eine resultierende Druckkraft einwirkt. Ist die durch den in der Ausgleichkammer 39 herrschenden Primärdruck auf die Abschlussfläche 35 wirkende Druckkraft betragsmäßig größer als die ihr entgegenwirkende, von dem auf die Abstützfläche 36 wirkenden Sekundärdruck hervorgerufene Druckkraft, was den Regelfall darstellt, so wird der bewegbare Abstützkörper 33 mit seiner Abstützfläche 36 an die Gegenabstützfläche 42 angedrückt und die resultierende Druckkraft wird letztlich über den Gegenabstützkörper 41 in das Ventilgehäuse 2 eingeleitet.

Die stirnseitig am Gegenabstützkörper 41 angeordnete Gegenabstützfläche 42 ist zweckmäßigerweise betragsmäßig kleiner als die Abstützfläche 36 des Abstützkörpers 33, so dass die Gegenabstützfläche 42 nur einen Teil der Abstützfläche 36 bedeckt, wenn der Abstützkörper 33 an der Gegenabstützfläche 42 anliegt. Hierdurch wird erreicht, dass ein relativ großer Betrag der Abstützfläche 36 durch das in der Beaufschlagungskammer 40 befindliche Fluid beaufschlagt wird. Außerdem ist dadurch auch die bei der Ausgleichsbewegung 57 auftretende Reibung sehr gering.

Die zwischen dem peripher an der Abstützkörpermantelfläche 34 angebrachte Dichtelement 38 und der Führungswand 26 des Führungskörpers 25 herrschende Reibungskraft kann größer als die am Abstützkörper 33 angreifende resultierende Druckkraft sein, so dass der Abstützkörper 33 durch das Ventilglied 15 bei seiner Arbeitsbewegung 48 mitgenommen wird und das Ventilglied 15 und der Abstützkörper 33 eine gemeinsame Arbeitsbewegung 48 ausführen. Dies ist bei relativ geringen Druckdifferenzen zwischen den Fluiddrücken im Primärkanal 11 und im Sekundärkanal 12 der Fall. Auf diese Weise tritt bei der Arbeitsbewegung 48 keinerlei Reibung zwischen dem Ventilglied 15 und dem Abstützkörper 33 auf, was Feinregelungen begünstigt.

## Patentansprüche

1. Ventil, mit einem Ventilgehäuse (2), in dem ein Primärkanal (11), ein Sekundärkanal (12) und eine zwischen dem Primärkanal (11) und dem Sekundärkanal (12) angeordnete Überströmöffnung (13) ausgebildet sind, wobei die Überströmöffnung (13) auf der dem Sekundärkanal (12) zugewandten Seite von einem Ventilsitz (14) umrahmt ist, mit einem im Ventilgehäuse (2) angeordneten Ventilglied (15), das unter Ausführung einer Arbeitsbewegung (48) in Achsrichtung einer imaginären Hauptachse (4) relativ zum Ventilsitz (14) zwischen einer an dem Ventilsitz (14) anliegenden Schließstellung, in der das Ventilglied (15) die Überströmöffnung (13) mit einer an seiner Vorderseite angeordneten Schließfläche (16) abdeckt, und mindestens einer von dem Ventilsitz (14) abgehobenen Offenstellung bewegbar ist, wobei das Ventilglied (15) mit einer entgegengesetzt zur Schließfläche (16) orientierten und zumindest im Wesentlichen gleich groß wie die Schließfläche (16) ausgebildeten Kompensationsfläche (17) eine zumindest in der Schließstellung mit dem Primärkanal (11) verbundene Ausgleichskammer (39) begrenzt, die außerdem von einer der Kompensationsfläche (17) gegenüberliegenden Abschlussfläche (35) eines Abstützkörpers (33) begrenzt ist, **dadurch gekennzeichnet, dass** der Abstützkörper (33) unter Abdichtung in eine rückseitige Führungsausnehmung (27) des Ventilgliedes (15) eintaucht und in dieser Führungsausnehmung (27) mit der an ihm angeordneten Abschlussfläche (35) die Ausgleichskammer (39) begrenzt, wobei das Ventilglied (15) und der Abstützkörper (33) in Achsrichtung der Hauptachse (4) relativ zueinander verschieblich sind, und dass der Abstützkörper (33) eine der Abschlussfläche (35) entgegengesetzte Abstützfläche (36) aufweist, mit der er an einer gehäusefesten Gegenabstützfläche (42) abgestützt oder abstützbar ist, wobei er relativ zu der Gegenabstützfläche (42) quer zur Achsrichtung der Hauptachse (4) allseits beweglich ist.

2. Ventil nach Anspruch 1, **dadurch gekennzeichnet, dass** der in die rückseitige Führungsausnehmung (27) eingetauchte Abstützkörper (33) mit seiner Abstützfläche (36) eine Beaufschlagungskammer (40) begrenzt, die unabhängig von der Stellung des Ventilglieds (15) ständig mit dem Sekundärkanal (12) verbunden ist.

3. Ventil nach Anspruch 2, **dadurch gekennzeichnet, dass** die Beaufschlagungskammer (40) auch von der außerhalb der Ausgleichskammer (39) angeordneten Rückseite des Ventilglieds (15) begrenzt ist.

4. Ventil nach einem der Ansprüche 1 bis 3, **dadurch gekennzeichnet, dass** die Gegenabstützfläche (42) stirnseitig an einem bezüglich des Ventilgehäuses (2) ortsfesten Gegenabstützkörper (41) ausgebildet ist, der zweckmäßigerweise stabförmig ausgebildet ist.

5. Ventil nach Anspruch 4, **dadurch gekennzeichnet, dass** der Gegenabstützkörper (41) Bestandteil eines Deckelelementes (43) ist, das eine das Ventilglied (15) aufnehmende Ausnehmung (3) eines Gehäusehauptteils des Ventilgehäuses (2) verschließt.

6. Ventil nach einem der Ansprüche 1 bis 5, **dadurch gekennzeichnet, dass** die Gegenabstützfläche (42) betragsmäßig kleiner als die rückseitige Abstützfläche (36) des Abstützkörpers (33) ausgebildet ist, derart, dass die Abstützfläche (36) von der an ihr anliegenden Gegenabstützfläche (42) nur teilweise bedeckt ist.

7. Ventil nach einem der Ansprüche 1 bis 6 **dadurch gekennzeichnet, dass** das Ventilglied (15) von einer zur Schließfläche (16) und zur Kompensationsfläche (17) ausmündenden Durchbrechung (32) durchsetzt ist, die die Verbindung zwischen dem Primärkanal (11) und der Ausgleichskammer (39) herstellt, wobei diese Durchbrechung (32) bezüglich der Hauptachse (4) zweckmäßigerweise zumindest im Wesentlichen koaxial angeordnet ist.

8. Ventil nach einem der Ansprüche 1 bis 7, **dadurch gekennzeichnet, dass** zwischen dem radialen Außenumfang des Abstützkörpers (33) und einer peripheren Führungswand (26) der Führungsausnehmung (27) mindestens ein gummielastische Eigenschaften aufweisendes Dichtelement (38) angeordnet ist, das zweckmäßigerweise an dem Abstützkörper (33) angeordnet ist.

9. Ventil nach einem der Ansprüche 1 bis 8, **dadurch gekennzeichnet, dass** der Abstützkörper (33) in Achsrichtung der Hauptachse (4) relativ zu der gehäusefesten Gegenabstützfläche (42) axial frei bewegbar ist.

10. Ventil nach Anspruch 9, **dadurch gekennzeichnet, dass** der Abstützkörper (33) bezüglich der Gegenabstützfläche (42) separat ausgebildet ist und im sich an der Gegenabstützfläche (42) abstützenden Zustand lose an die Gegenabstützfläche (42) angedrückt ist.

11. Ventil nach einem der Ansprüche 1 bis 10, **dadurch gekennzeichnet, dass** die der gehäusefesten Gegenabstützfläche (42) gegenüberliegende Abstützfläche (36) des Abstützkörpers (33) konvex gewölbt ist, wobei zweckmäßigerweise die Gegenabstützfläche (42) plan ausgebildet ist.

12. Ventil nach einem der Ansprüche 1 bis 11, **dadurch gekennzeichnet, dass** das Ventil (1) mit einem elektrisch betätigbaren Stellantrieb (46) zum Hervorrufen der Arbeitsbewegung (48) des Ventilglieds (15) ausgestattet ist, wobei das Ventilglied (15) und das Ventilgehäuse (2) jeweils eine von zwei miteinander kooperierenden Stellantriebskomponenten des Stellantriebs (46) aufweisen.

13. Ventil nach Anspruch 12, **dadurch gekennzeichnet, dass** die bezüglich des Ventilglieds (15) ortsfeste Stellantriebskomponente (47) des Stellantriebs (46) an einem die Gegenabstützfläche (42) aufweisenden Gegenabstützkörper (41) angeordnet ist und zweckmäßigerweise von dem Gegenabstützkörper (41) koaxial durchsetzt ist.

14. Ventil nach einem der Ansprüche 1 bis 13, **dadurch gekennzeichnet, dass** das Ventilglied (15) einen topfartig gestalteten Ventilgliedkörper (18) aufweist, der einen rückseitig offenen Ventilgliedinnenraum (23) begrenzt.

15. Ventil nach Anspruch 14, **dadurch gekennzeichnet, dass** der Ventilgliedkörper (15) eine Bodenwand (21) und eine rückseitig von der Bodenwand (21) wegragende Seitenwand (22) aufweist, wobei rückseitig an der Bodenwand (21) ein die Führungsausnehmung (27) definierender hülsenförmiger Führungskörper (25) angeordnet ist, der unter Bildung eines Ringraums (30) mit radialem Abstand von der Seitenwand (22) umgeben ist, wobei sich in dem Ringraum (30) zweckmäßigerweise eine das Ventilglied (15) ständig in die Schließstellung vorspannende Druckfeder (31) erstreckt.

16. Ventil nach einem der Ansprüche 1 bis 15, **dadurch gekennzeichnet, dass** das Ventilglied (15) an seiner dem Ventilsitz (14) zugewandten Vorderseite ein Schließelement (19) aufweist, das die Schließfläche (16) bildet und das insbesondere über gummielastische Eigenschaften verfügt.

## Claims

1. Valve, with a valve housing (2), in which a primary channel (11), a secondary channel (12) and an overflow opening (13) arranged between the primary channel (11) and the secondary channel (12) are arranged, wherein the overflow opening (13) is framed by a valve seat (14) on the side facing the secondary channel (12), with a valve member (15) arranged in the valve housing (2), which by performing a working movement (48) in the axial direction of the imaginary main axis (4) relative to the valve seat (14) is movable between a closed position abutting the valve seat (14), in which the valve member (15) covers the overflow opening (13) with a closing surface (16) arranged on its front side, and at least one open position raised above the valve seat (14), wherein the valve member (15) with a compensation surface (17) oriented opposite to the closing surface (16) and designed at least essentially equal to the closing surface (16) limits a compensating chamber (39) connected at least in the closed position with the primary channel (1), which moreover is limited by an end surface (35) of a support body (33) opposite the compensation surface (17), **characterised in that** the support body (33) with sealing dips into a rear guide recess (27) of the valve member (15) and in this guide recess (27) with the end surface (35) arranged on it limits the compensating chamber (39), wherein the valve member (15) and the support body (33) are displaceable relative to each other in the axial direction of the main axis (4), and that the support body (33) has a support surface (36) opposite the end surface (35), with which it is supported or supportable on a mating support surface (42) fixed relative to the housing, wherein it is movable on all sides relative to the mating support surface (42) transversely to the axial direction of the main axis (4).

2. Valve according to Claim 1, **characterised in that** the support body (33) dipped into the rear guide recess (27) with its support surface (36) limits a pressurisation chamber (40), which independent of the position of the value element (15).is constantly connected with the secondary channel (12).

3. Valve according to Claim 2, **characterised in that** the pressurisation chamber (40) is also limited by the rear side of the valve member (15) arranged on the outside of the compensating chamber (39).

4. Valve according to any one of Claims 1 to 3, **characterised in that** the mating support surface (42) is arranged at the end face on a mating support body (1) in a stationary manner with respect to the valve housing (2) which is designed advantageously in a rod-shaped manner.

5. Valve according to Claim 4, **characterised in that** the mating support body (41) is a component of a cover element (43), which closes a recess (3) of a housing main part of the valve housing (2) accommodating the valve member (15).

6. Valve according to any one of Claims 1 to 5, **characterised in that** the mating support surface (42) is designed in terms of magnitude smaller than the rear support surface (36) of the support body (33), in such a manner that the support surface (36) is only partially covered by the mating support surface (42) abutting it.

7. Valve according to any one of Claims 1 to 6 **characterised in that** the valve member (15) is carried out by a through-hole (32) opening to the closing surface (16) and to the compensation surface (17), which establishes the connection between the primary channel (11) and the compensating chamber (39), wherein this through-hole (32) is arranged advantageously at least substantially coaxially with respect to the main axis (4).

8. Valve according to any one of Claims 1 to 7, **characterised in that** between the radial outer periphery of the support body (33) and a peripheral guide wall (26) of the guide recess (27) at least one sealing element (38) having rubber-elastic properties is arranged, which is arranged advantageously on the support body (33).

9. Valve according to any one of Claims 1 to 8, **characterised in that** the support body (33) is freely movable axially in the axial direction of the main axis (4) relative to the mating support surface (42) fixed relative to the housing.

10. Valve according to Claim 9, **characterised in that** the support body (33) is formed separately with respect to the mating support surface (42) and in the condition of being supported on the mating support surface (42) is pressed loosely against the mating support surface (42).

11. Valve according to any one of Claims 1 to 10, **characterised in that** the support surface (36) of the support body (33) opposite the mating support surface (42) fixed relative to the housing is curved convexly, wherein advantageously the mating support surface (42) is designed to be planar.

12. Valve according to any one of Claims 1 to 11, **characterised in that** the valve (1) is equipped with an electrically actuable drive (46) for producing the working movement (48) of the valve member (15), wherein the valve member (15) and the valve housing (2) in each case have one of two actuating drive components of the actuating drive (46) which cooperate with each other.

13. Valve according to Claim 12, **characterised in that** the actuating drive component (47) of the actuating drive (46), which is stationary with regard to the valve member (15), is arranged on a mating support body (41) having the mating support surface (42) and is advantageously penetrated coaxially by the mating support body (41).

14. Valve according to any one of Claims 1 to 13, **characterised in that** the valve member (15) has a valve member body (18) shaped in a pot-like manner, which limits a valve member inner space (23) which is open on the rear side.

15. Valve according to Claim 14, **characterised in that** the valve member body (15) has a bottom wall (21) and a side wall (22) protruding on the rear side from the bottom wall (21), wherein on the rear side on the bottom wall (21) a sleeve-shaped guide body (25) defining the guide recess (27) is arranged, which is surrounded under formation of an annular space (30) with radial distance from the side wall (22), wherein in the annular space (30) advantageously a pressure spring (31) extends biasing the valve member (15) constantly into the closed position.

16. Valve according to any one of Claims 1 to 15, **characterised in that** the valve member (15) has a closing element (19) on its front side facing the valve seat (14), which forms the closing surface (16) and which in particular has rubber-elastic properties.

## Revendications

1. Soupape, avec un carter de soupape (2), dans lequel un canal primaire (11), un canal secondaire (12) et une ouverture de trop-plein (13) disposée entre le canal primaire (11) et le canal secondaire (12) sont réalisés, dans laquelle l'ouverture de trop-plein (13) est encadrée par un siège de soupape (14) sur le côté tourné vers le canal secondaire (12), avec un organe de soupape (15) disposé dans le carter de soupape (2), lequel peut être déplacé, en exécutant un déplacement de travail (48) dans la direction axiale d'un axe principal (4) imaginaire, par rapport au siège de soupape (14), entre une position de fermeture reposant contre le siège de soupape (14), dans laquelle l'organe de soupape (15) recouvre l'ouverture de trop-plein (13) avec une surface de fermeture (16) disposée au niveau de son côté avant, et au moins une position ouverte décollée du siège de soupape (14), dans laquelle l'organe de soupape (15) délimite, par une surface de compensation (17) orientée à l'opposé de la surface de fermeture (16) et réalisée au moins sensiblement aussi grande que la surface de fermeture (16), une chambre de compensation (39) reliée, au moins dans la position de fermeture, au canal primaire (11), laquelle est délimitée en outre par une surface de terminaison (35), faisant face à la surface de compensation (17), d'un corps de soutien (33), **caractérisée en ce que** le corps de soutien (33) plonge, tout en assurant l'étanchéité, dans un évidement de guidage (27), situé côté arrière, de l'organe de soupape (15) et délimite, dans ledit évidement de guidage (27), par la surface de terminaison (35) disposée au niveau de ce dernier, la chambre de compensation (39), dans laquelle l'organe de soupape (15) et le corps de soutien (33) peuvent être coulissés l'un par rapport à l'autre dans la direction axiale de l'axe principal (4), et **en ce que** le corps de soutien (33) présente une surface de soutien (36) opposée à la surface de terminaison (35), par laquelle il est soutenu ou peut être soutenu au niveau d'une contre-surface de soutien (42) solidaire du carter, dans laquelle il est mobile de tous les côtés par rapport à la contre-surface de soutien (42) de manière transversale par rapport à la direction axiale de l'axe principal (4).

2. Soupape selon la revendication 1, **caractérisée en ce que** le corps de soutien (33) enfoncé dans l'évidement de guidage (27) situé côté arrière délimite, par sa surface de soutien (36), une chambre de sollicitation (40), qui est reliée, indépendamment de la position de l'organe de soupape (15), en permanence au canal secondaire (12).

3. Soupape selon la revendication 2, **caractérisée en ce que** la chambre de sollicitation (40) est délimitée également par le côté arrière, disposé à l'extérieur de la chambre de compensation (39), de l'organe de soupape (15).

4. Soupape selon l'une quelconque des revendications 1 à 3, **caractérisée en ce que** la contre-surface de soutien (42) est réalisée côté frontal au niveau d'un contre-corps de soutien (41) stationnaire par rapport au carter de soupape (2), lequel est réalisé de manière appropriée de manière à présenter la forme d'une barre.

5. Soupape selon la revendication 4, **caractérisée en ce que** le contre-corps de soutien (41) fait partie intégrante d'un élément de couvercle (43), qui ferme un évidement (3), recevant l'organe de soupape (15), d'une partie principale de carter du carter de soupape (2).

6. Soupape selon l'une quelconque des revendications 1 à 5, **caractérisée en ce que** la contre-surface de soutien (42) est réalisée proportionnellement plus petite sur la surface de soutien (36), située côté arrière, du corps de soutien (33), de telle manière que la surface de soutien (36) est recouverte seulement en partie par la contre-surface de soutien (42) reposant au niveau de cette dernière.

7. Soupape selon l'une quelconque des revendications 1 à 6, **caractérisée en ce que** l'organe de soupape (15) est traversé par un ajour (32) débouchant en direction de la surface de fermeture (16) et en direction de la surface de compensation (17), lequel établit la liaison entre le canal primaire (11) et la chambre de compensation (39), dans laquelle ledit ajour (32) est disposé de manière appropriée au moins sensiblement de manière coaxiale par rapport à l'axe principal (4).

8. Soupape selon l'une quelconque des revendications 1 à 7, **caractérisée en ce qu'**au moins un élément d'étanchéité (38) présentant des propriétés élastiques est disposé entre la périphérie extérieure radiale du corps de soutien (33) et une paroi de guidage (26) périphérique de l'évidement de guidage (27), lequel élément d'étanchéité est disposé de manière appropriée au niveau du corps de soutien (33).

9. Soupape selon l'une quelconque des revendications 1 à 8, **caractérisée en ce que** le corps de soutien (33) peut être déplacé librement de manière axiale dans la direction axiale de l'axe principal (4) par rapport à la contre-surface de soutien (42) solidaire du carter.

10. Soupape selon la revendication 9, **caractérisée en ce que** le corps de soutien (33) est réalisé de manière séparée par rapport à la contre-surface de soutien (42) et est poussé de manière lâche contre la contre-surface de soutien (42) dans l'état en appui contre la contre-surface de soutien (42).

11. Soupape selon l'une quelconque des revendications 1 à 10, **caractérisée en ce que** la surface de soutien (36), faisant face à la contre-surface de soutien (42) solidaire du carter, du corps de soutien (33) est bombée de manière convexe, dans laquelle de manière appropriée la contre-surface de soutien (42) est réalisée de manière plane.

12. Soupape selon l'une quelconque des revendications 1 à 11, **caractérisée en ce que** la soupape (1) est équipée d'un entraînement de réglage (46) pouvant être actionné de manière électrique, servant à entraîner le déplacement de travail (48) de l'organe de soupape (15), dans laquelle l'organe de soupape (15) et le carter de soupape (2) présentent respectivement une parmi deux composantes d'entraînement de réglage coopérant l'une avec l'autre de l'entraînement de réglage (46).

13. Soupape selon la revendication 12, **caractérisée en ce que** la composante de réglage (47), stationnaire par rapport à l'organe de soupape (15), de l'entraînement de réglage (46) est disposée au niveau d'un contre-corps de soutien (41) présentant la contre-surface de soutien (42) et est traversée de manière appropriée et coaxiale par le contre-corps de soutien (41).

14. Soupape selon l'une quelconque des revendications 1 à 13, **caractérisée en ce que** l'organe de soupape (15) présente un corps d'organe de soupape (18) configuré à la manière d'un pot, lequel délimite un espace intérieur d'organe de soupape (23) ouvert côté arrière.

15. Soupape selon la revendication 14, **caractérisée en ce que** le corps d'organe de soupape (15) présente une paroi de fond (21) et une paroi latérale (22) dépassant sur le côté arrière de la paroi de fond (21), dans laquelle est disposé, côté arrière au niveau de la paroi de fond (21), un corps de guidage (25) en forme de douille définissant l'évidement de guidage (27), lequel est entouré par la paroi latérale (22) à une distance radiale en formant un espace annulaire (30), dans laquelle de manière appropriée, un ressort de pression (31) précontraignant l'organe de soupape (15) en permanence dans la position de fermeture s'étend dans l'espace annulaire (30).

16. Soupape selon l'une quelconque des revendications 1 à 15, **caractérisée en ce que** l'organe de soupape (15) présente, au niveau de son côté avant tourné vers le siège de soupape (14), un élément de fermeture (19), qui forme la surface de fermeture (16) et qui dispose en particulier de propriétés élastiques.
